Europäisches Patentamt

(19) European Patent Office

Office européen des brevets

(11) Publication number: **0 167 807**
**B1**

(12) **EUROPEAN PATENT SPECIFICATION**

(45) Date of publication of patent specification: 31.01.90

(51) Int. Cl.⁵: **F 02 B 29/04,** F 01 P 3/20, F 01 P 7/14

(21) Application number: 85106841.1

(22) Date of filing: 03.06.85

(54) A supercharger system for use with heat engines.

(30) Priority: 04.06.84 ES 533434
04.06.84 ES 533435

(43) Date of publication of application:
15.01.86 Bulletin 86/03

(45) Publication of the grant of the patent:
31.01.90 Bulletin 90/05

(84) Designated Contracting States:
BE DE FR GB IT NL SE

(56) References cited:
WO-A-83/02481
FR-A-2 474 591
GB-A-1 153 655
US-A-3 134 371
US-A-3 144 749
US-A-3 881 455
US-A-4 237 689

(73) Proprietor: Targa, Juan
Benet Mercadé, 17
Barcelona (ES)

(72) Inventor: Targa, Juan
Benet Mercadé, 17
Barcelona (ES)

(74) Representative: Klunker, Hans-Friedrich, Dr.
Patentanwälte Klunker . Schmitt-Nilson . Hirsch
Winzererstrasse 106
D-8000 München 40 (DE)

Courier Press, Leamington Spa, England.

# Description

The invention relates to a supercharger system for use with heat engines of the type comprising:

a compressor supplying air or an air-fuel mixture to the inlet of the engine;

a heat exchanger placed between the outlet of the compressor and the inlet of the engine and provided with a refrigerant liquid flowing therethrough for cooling the air or the air-fuel mixture supplied by the compressor;

the refrigerant liquid circuit comprising an expansion chamber and a pump;

the flow of the refrigerant liquid through the heat exchanger being controlled according to the pressure of the supercharging air or air-fuel mixture.

In a supercharger system of that type the inlet pressure to the cylinders of the engine is increased to obtain an improved charge to the cylinder and, hence, an increase of power. It is known to use turbo compressors, in which a rotary member is driven by a turbine using the engine exhaust gases.

Compressing the air or the air-fuel mixture raises the temperature of the gas. The present invention intends to provide for a system in which the air or the air-fuel mixture is effectively cooled, to keep the temperature of the gas low.

In accordance with the pre-characterizing part of claim 1, GB—A—1 153 655 discloses a supercharger system comprising a refrigerant liquid circuit having a heat exchanger for cooling the compressed air or air-fuel mixture. In this prior art supercharger system insufficient cooling of the liquid cooling circuit might occur if the cooling liquid is supplied at a relatively low rate. Alternatively, one can consider to provide a cooling system having a large capacity. However, such large capacity cooling systems are considerably space consuming.

WO—83/02481 discloses a supercharger system having a heat exchanger in which a heat exchange is achieved between the compressed air and a heat accumulating active medium. In a specific embodiment shown in said document, there is provided a layered structure of the heat exchanger. The layered structure comprises layers for guiding the heat accumulating active medium flow, layers for guiding compressed air as well as layers including cooling air passages sandwiched between said other two types of layers.

It is the object of the present invention to provide for a supercharger system in which the heat exchanger is comprised of a simple structure but is nevertheless suitable for obtaining efficient cooling of the compressed air or air-fuel mixture.

In accordance with the characterizing part of claim 1, the heat exchanger comprises a first set and a second set of internal tubes and manifolds, wherein the set is enveloped by the second set and the tubes and manifolds of the second set is externally cooled by surrounding air blowed by an electric fan. In the supercharger system of the present invention the compressed air or air-fuel mixture is internally cooled by the refrigerant liquid (water) flowing through the tubes and manifolds of the first set, and is further cooled by the blown air which flows over the external surface of the second set of tubes and manifolds. Thereby, high cooling efficiency is obtained.

Embodiments of the invention are shown in the attached drawings in which:

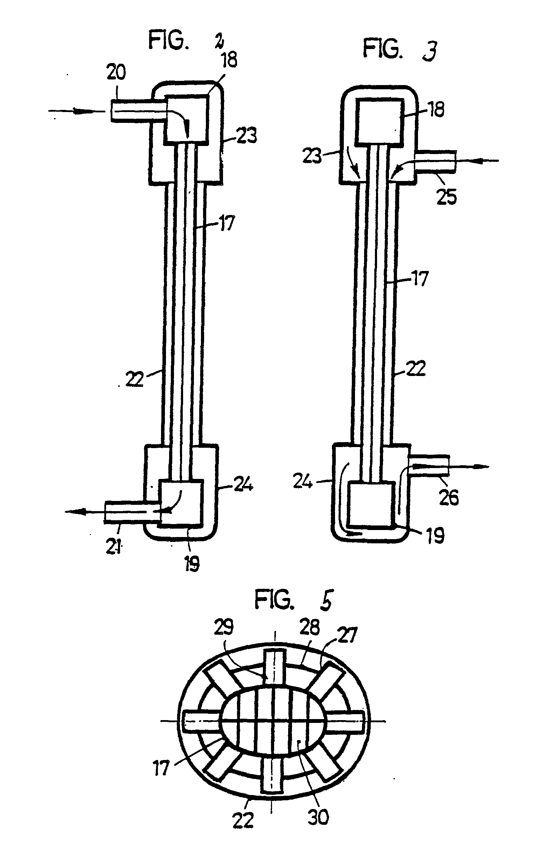

Figure 1 shows an elevation with a partial cutaway section of gas cooler,

Figure 2 is a cross-section on the plane VI—VI of Figure 1,

Figure 3 is a side elevation corresponding to the previous figures,

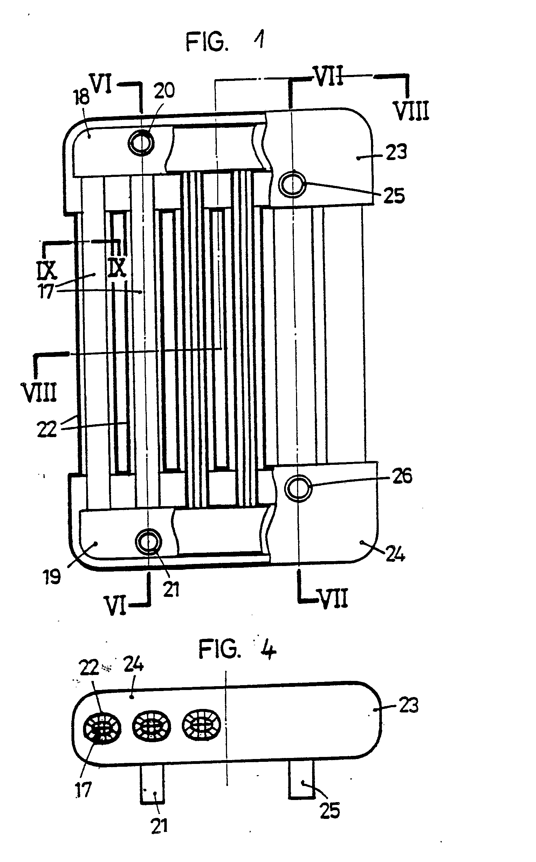

Figure 4 is a cross-section on the plane VIII—VIII of figure 1,

Figure 5 is a detail in cross-section on the plane IX—IX of figure 1.

The shown heat exchanger comprises a structure for the transfer of heat between the fluid charge to an engine, the water of a cooling circuit and cooling air. Internal tube bundles 17 are mutually parallel and are connected to an upper manifold 18 and a lower manifold 19 in which are provided respectively entry ports 20 and outlet ports 21 for the refrigerant fluid (which normally would be water). These tubes and manifolds are enveloped by another series of tubes in bundles 22 which encase externally the tubes 17 and other upper and lower manifolds 23 and 24 which encase the manifolds 18 and 19. Entry and exit port 25 and 26 complete the engine charge gas circuit, the gases circulating on the outside of the space occupied by the internal coolant fluid.

This arrangement allows for the passage of a second refrigerant fluid, preferably air, which flows on the outside of the tubes 22 and the manifolds 23 and 24, producing a double cooling effect.

Preferably the flow of the internal refrigerant fluid is co-axial to the flow of supercharged air or air-fuel mixture, while the external coolant fluid flow, air, is transversal.

To improve the calorific interchange and to save space occupied by the tubes the tubes are generally in an oval form as may be seen in the transverse section with a castellated bent structure of the inner tubes as seen in Figure 5. The folds are virtually right angled to define protrusions 27 which are radial between the inner surface 28 of the inner tube and the surface of the enveloping external tube.

Also to allow a better heat transfer in the inner tube this is provided with a multiplicity of interior radial fins 29 which extend into the tube providing an ideally radial space 30 within the nucleous thereof.

# Claims

1. A supercharger system for use with heat engines, comprising:

a compressor supplying air or an air-fuel mixture to the inlet of the engine;

a heat exchanger placed between the outlet of the compressor and the inlet of the engine and provided with a refrigerant liquid flowing therethrough for cooling the air or the air-fuel mixture supplied by the compressor;

the refrigerant liquid circuit comprising an expansion chamber and a pump;

the flow of the refrigerant liquid through the heat exchanger being controlled according to the pressure of the supercharging air or air-fuel mixture,

characterized in that said heat exchanger comprises a first set of internal tubes (17) and manifolds (18, 19) in which the refrigerant liquid flows, said first set of internal tubes and manifolds being enveloped by a second set of tubes (22) and manifolds (23, 24) in which the air or the air fuel mixture supplied by the compressor flows, said first set of internal tubes (17) and manifolds (18, 19) forming a first exchanger surface between the refrigerant liquid and the air or the air-fuel mixture supplied by the compressor, said second set of tubes (22) and manifolds (23, 24) being externally cooled by surrounding air blowed by an electric fan, thereby forming a second heat exchanger surface between the cooling air blowed by the fan and the air or the air-fuel mixture supplied by the compressor.

2. A supercharger system as in claim 1, characterized in that the refrigerant liquid is water.

3. A supercharger system as in claim 1 or 2 characterized in that the tubes (17) of the first set of tubes and manifolds are folded radially forming multiple longitudinal protuberances (27) between the internal surface of the tubes (17) and the inner surfaces of the tubes (22) of said second set of tubes and manifolds thus forming a castellated structure which increases the transfer surface area.

4. A supercharger system as in any of claims 1 to 3, characterized in that the internal tubes (17) of said first set of tubes and manifolds have internal radial fins which increase further the heat transfer area.

**Patentansprüche**

1. Verdichtungsanlage für Wärmekraftmaschinen mit:

einem Kompressor, der dem Maschineneinlaß Luft oder ein Luft-Brennstoffgemisch zuführt;

einem Wärmetauscher, der zwischen dem Kompressorauslaß und dem Maschineneinlaß angeordnet ist und eine dadurch hindurchfließende Kühlflüssigkeit enthält, um die oder das von dem Kompressor gelieferte Luft bzw. Luft-Brennstoffgemisch zu kühlen; wobei

der Kühlflüssigkeitskreislauf eine Expansionskammer und eine Pumpe umfaßt;

und die Strömung der Kühlflüssigkeit durch den Wärmetauscher entsprechend dem Druck der oder des zu verdichtenden Luft bzw. Luft-Brennstoffgemischs geregelt ist, gekennzeichnet durch einen Wärmetauscher mit einem ersten Satz innen liegender Rohre (17) und Verteiler (18, 19) in welchen die Kühlflüssigkeit fließt, wobei der erste Satz innen liegender Rohre und Verteiler von einem zweiten Satz Rohre (22) und Verteiler (23, 24), in welchen die oder das von dem Kompressor gelieferte Luft bzw. Luft-Brennstoffgemisch strömt, umgeben ist, und wobei der erste Satz innen liegender Rohre (17) und Verteiler (18, 19) eine erste Austauscheroberfläche zwischen der Kühlflüssigkeit und der oder dem von dem Kompressor gelieferten Luft oder Luft-Brennstoffgemisch bildet und der zweite Satz Rohre (22) und Verteiler (23, 24) außenseitig durch von einem Gebläse eingeblasene Außenluft gekühlt ist, wodurch eine zweite Wärmetauscheroberfläche zwischen der durch das Gebläse eingeblasenen Kühlluft und der oder dem von dem Kompressor gelieferten Luft bzw. Luft-Brennstoffgemischs gebildet ist.

2. Verdichtungsanlage nach Anspruch 1, dadurch gekennzeichnet, daß die Kühlflüssigkeit Wasser ist.

3. Verdichtungsanlage nach Anspruch 1 oder 2, dadurch gekennzeichnet, daß die Rohre (17) des ersten Rohr- und Verteilersatzes radial gefaltet sind, wodurch mehrere, längs verlaufende Ausstülpungen (27) zwischen der innen liegenden Oberfläche der Rohre (17) und den inneren Oberflächen der Rohre (22) der zweiten Rohr- und Verteilersatzes gebildet sind und folglich eine die Übertragungsfläche vergrößernde, durchbrochene Struktur gebildet ist.

4. Verdichtungsanlage nach einem der Ansprüche 1 bis 3, dadurch gekennzeichnet, daß die innen liegenden Rohre (17) des ersten Rohr- und Verteilersatzes innen liegende radiale Kühlrippen aufweisen, die die Wärmeübertragungsfläche weiter steigern.

**Revendications**

1. Un système surpresseur destiné à être utilisé avec des moteurs thermiques, comprenant: un compresseur fournissant de l'air ou un mélange air-carburant à l'admission du moteur; un échangeur de chaleur disposé entre la sortie du compresseur et l'entrée du moteur et traversé par un liquide réfrigérant pour refroidir l'air ou le mélange air-carburant fourni par le compresseur; le circuit de réfrigérant liquide comprenant une chambre d'expansion et une pompe; le débit du liquide réfrigérant à travers l'échangeur de chaleur étant commandé en fonction de la pression de l'air ou du mélange air-carburant surpressé, caractérisé en ce que ledit échangeur de chaleur comporte un premier jeu de tubes (17) et de collecteurs (18, 19) internes dans lesquels s'écoule le liquide réfrigérant, ledit premier jeu de tubes et de collecteurs internes étant entouré d'un second jeu de tubes (22) et de collecteurs (23, 24) dans lesquels s'écoule l'air ou le mélange air-carburant fourni par le compresseur, ledit premier jeu de tubes (17) et de collecteurs (18, 19) internes formant une première surface d'échange entre le liquide réfrigérant et l'air ou le mélange air-carburant fourni par le compresseur, ledit second jeu de tubes (22) et de collecteurs (23, 24) étant refroidi extérieurement par l'air ambiant refoulé par un ventilateur électrique, de manière à former une seconde surface d'échangeur de chaleur entre l'air de refroidissement refoulé par le ventilateur et l'air ou le mélange air-carburant fourni par le compresseur.

2. Un système suppresseur selon la revendication 1, caractérisé en ce que le réfrigérant liquide est de l'eau.

3. Un système surpresseur selon la revendication 1 ou 2, caractérisé en ce que les tubes (17) du premier jeu de tubes et de collecteurs sont repliés radialement en formant une pluralité de protubérances longitudinales (27) entre la surface interne des tubes (17) et les surfaces intérieures des tubes (22) dudit second jeu de tubes et de collecteurs, en formant ainsi une structure crénelée qui augmente la surface de transfert.

4. Un système surpresseur selon l'une quelconque des revendications 1 à 3, caractérisé en ce que les tubes internes (17) dudit premier jeu de tubes et de collecteurs comportent des ailettes radiales internes qui augmentent encore la surface de transfert de chaleur.

FIG. 2

FIG. 3

FIG. 5

FIG. 1

FIG. 4